# EUROPÄISCHE PATENTANMELDUNG

(11) **EP 1 311 047 A2**
(43) Veröffentlichungstag der Anmeldung: **14.05.2003**
(21) Anmeldenummer: 02024356.4
(22) Anmeldetag: 02.11.2002
(51) Int. Cl.: H02H 7/093, H02H 6/00

(54) **Verfahren zur sicherheitsgerichteten Drehzahlüberwachung eines geregelten Antriebsmotors**

(30) Priorität: 09.11.2001 DE 10154690
(71) Anmelder: Lenze Drive Systems GmbH, 31855 Aerzen (DE)
(72) Erfinder: Tinebor, Manfred, Dipl.-Ing., 32683 Barntrup (DE)
(74) Vertreter: Elbertzhagen, Otto, Dipl.-Ing.

(57) **Zusammenfassung**

Bei einem Verfahren zur sicherheitsgerichteten Drehzahlüberwachung zum Betrieb eines mit einer Drehzahlregelung ausgestatteten elektrischen Antriebsmotors wird eine von einem Drehgeber gemessene Drehzahl mit einer berechneten Drehzahl verglichen und bei Überschreiten eines Differenzschwellwertes zwischen der gemessenen und der berechneten Drehzahl der Antriebsmotor stillgesetzt. Um im gesamten Drehzahlbereich und bei allen Lastzuständen funktionssicher im Fehlerfalle abzuschalten, wird in einem unabhängigen Rechner anhand eines mathematischen Maschinenmodells eine Modelldrehzahl errechnet und wird bei Abweichung der errechneten Modelldrehzahl von der vom Drehgeber gemessenen Drehzahl über den Schwellwert hinaus das Stillsetzen des Antriebsmotors eingeleitet.

## Beschreibung

Die Erfindung bezieht sich auf ein Verfahren zur sicherheitsgerichteten Drehzahlüberwachung eines mit einer Drehzahl-Regelung ausgestatteten elektrischen Antriebsmotors, wobei bei Überschreiten eines Schwellwertes der von einem Drehgeber gemessenen Drehzahl der Antriebsmotor stillgesetzt wird.

Elektrische Antriebsmotore werden vornehmlich zum Antrieb von Produktionsmaschinen eingesetzt und können hier gefahrbringende Bewegungen ausführen, die eine Verletzung von Personen zur Folge haben können. Dies kann beim Einrichtbetrieb, bei der Beseitigung von Produktionsstörungen oder im Servicebetrieb beispielsweise an Drehautomaten, Bearbeitungszentren oder sonstigen automatisierten Fertigungssystemen der Fall sein, und es müssen hierbei gefährliche Maschinenbewegungen verhindert werden. Dazu dient die sicherheitsgerichtete Drehzahlüberwachung, die das sichere Einhalten einer bestimmten, in der Regel reduzierten Geschwindigkeit der Maschinenbewegungen ermöglicht.

Aufgrund von mechanischen oder elektrischen Fehlern kann der Drehgeber, welcher den Drehzahlen des Antriebsmotors proportionale Signale erzeugt, falsche Signale liefern. Mögliche mechanische Fehler können Bruch der Welle, Lösen des Geberrotors von der Welle oder Bruch der Kupplung sein, über die der Drehgeber mit der Motorwelle verbunden ist. Als elektrische Fehler sind beispielsweise Drahtbruch oder Kurzschluß denkbar. Falsche Drehgebersignale können bei drehzahlgeregelten Antriebsmotoren deren unkontrolliertes Hochlaufen auf gefährliche Drehzahlen zur Folge haben, welche zu erwähnten, gefahrbringenden Maschinenbewegungen führen.

Es sind Systeme bekannt, die das Erkennen eines Fehlers bei der Drehzahl-Messung eines elektrischen Antriebsmotors ermöglichen und im Fehlerfalle das Stillsetzen des Antriebsmotors einleiten. Üblicherweise wird hierzu ein zweiter Drehgeber verwendet, der mit einem separaten Drehzahlwächter verbunden ist. Dieser Drehzahlwächter veranlaßt die Abschaltung des Antriebsmotors, sobald die über den zweiten Drehgeber ermittelte Drehzahl einen eingestellten Drehzahl-Schwellwert überschreitet. Bei der Anordnung eines zweiten Drehgebers ist es auch gebräuchlich, die Signale beider Drehgeber miteinander zu vergleichen und bei auftretenden Differenzen einen sicheren Betriebszustand des Antriebssystems einzuleiten.

Ferner sind Verfahren zur sicherheitsgerichteten Drehzahlüberwachung bekannt, die mit einem einzigen Drehgeber auskommen. Hierbei müssen zusätzliche Überwachungen vorgenommen werden, insbesondere sind die Signalleitungen des Drehgebers ständig auf Drahtbruch oder Kurzschluß zu überprüfen. Nachteilig hierbei ist, daß mechanische Fehler im allgemeinen nicht erkannt werden.

Aus dem Dokument US-A-5, 691, 611 ist ebenfalls ein Verfahren bekannt, für das nur ein einziger Drehgeber benötigt wird. Hierbei wird aus den gemessenen Drehzahlwerten eine durchschnittliche Drehzahl errechnet und mit der gemessenen Augenblicksdrehzahl verglichen. Überschreitet die Differenz einen Grenzwert, wird von der Fehlfunktion des Drehgebers ausgegangen. Nachteilig bei diesem Verfahren ist eine Funktionsunsicherheit bei extrem niedrigen Drehzahlen des Antriebsmotors. So bleibt bei einem Bruch der Drehgeberwelle der Drehgeber stehen, weshalb Durchschnittswert und Augenblickswert der Drehzahl mit Null signalisiert werden und folglich keine auswertbare Differenz zwischen dem Durchschnittswert und dem Augenblickswert zur Verfügung steht. Hierbei kann der Antriebsmotor und entsprechend die von ihm angetriebene Maschine exzessive Drehzahlen erreichen, ohne daß die Drehzahlüberwachung den Fehler erkennt.

Aus der DE 199 27 851 A1 ist ein Verfahren zum Überwachen eines Drehgebers bekannt, welches bei niedrigen Drehzahlen besser arbeitet. Hierbei wird die Leistungsaufnahme der Maschine gemessen und mit einer berechneten Leistung verglichen, weshalb das bekannte Verfahren auch noch sicher im Blockierzustand der Maschine arbeitet. Eine Schwachstelle zeigt sich allerdings bei geringer Beschleunigung, wie sie bei einer leerlaufenden Maschine auftreten kann. Solche Beschleunigungen sind möglich, wenn aus Sicherheitsgründen eine Drehmomentbegrenzung auf kleine ungefährliche Drehmomente vorgenommen wird. Bei leerlaufender Maschine, wie es im Einrichtbetrieb in der Regel der Fall ist, bleibt die Lastleistung sehr klein gegenüber den Motorverlustleistungen und wird damit nicht mehr erkennbar. Bei leerund leichtlaufenden Maschinen, insbesondere wenn der Antriebsmotor keinen Eigenlüfter besitzt, reichen jedoch kleinste Lastleistungen aus, um überhohe Drehzahlen zu erreichen.

Der Erfindung liegt deshalb die Aufgabe zugrunde, ein Verfahren zur sicherheitsgerichteten Drehzahlüberwachung eines mit einer Drehzahlregelung ausgestatteten elektrischen Antriebsmotors zu schaffen, welches mit nur einem einzigen Drehgeber auskommt und im gesamten Drehzahlbereich, so auch bei kleinen Drehzahlen, arbeitet und bei allen Lastzuständen funktionssicher ist.

Zur Lösung dieser Aufgabe wird die von dem Drehgeber gemessene Drehzahl mit einer berechneten Drehzahl verglichen und bei Überschreiten eines Differenzschwellwertes zwischen der gemessenen und der berechneten Drehzahl der Antriebsmotor stillgesetzt, indem in einem unabhängigen Rechner anhand eines mathematischen Maschinenmodells eine Modelldrehzahl errechnet und bei Abweichung der errechneten Modelldrehzahl von der vom Drehgeber gemessenen Drehzahl über den Schwellwert hinaus das Stillsetzen des Antriebsmotors eingeleitet wird.

Für die Erfindung ist wesentlich, daß unabhängig von der Funktion der den Drehgeber aufweisenden Einrichtung zur Drehzahlregelung des Antriebsmotors, die einen Rechner zur Berechnung des Drehzahl-Istwertes umfaßt, ein weiterer, redundanter Rechner zur sicherheitsgerichteten Drehzahlüberwachung vorhanden ist.

Vorteilhafte Ausgestaltungsmerkmale der Erfindung ergeben sich aus den Unteransprüchen.

Die Erfindung wird nachfolgend anhand der Zeichnung an zwei Ausführungsbeispielen noch näher erläutert. Dabei zeigen:
- Fig. 1: das Blockschaltbild für den Betrieb eines elektrischen Antriebsmotors in einer ersten Ausführungsform und
- Fig. 2: das Blockschaltbild für den Betrieb eines elektrischen Antriebsmotors in einer zweiten Ausführungsvariante.

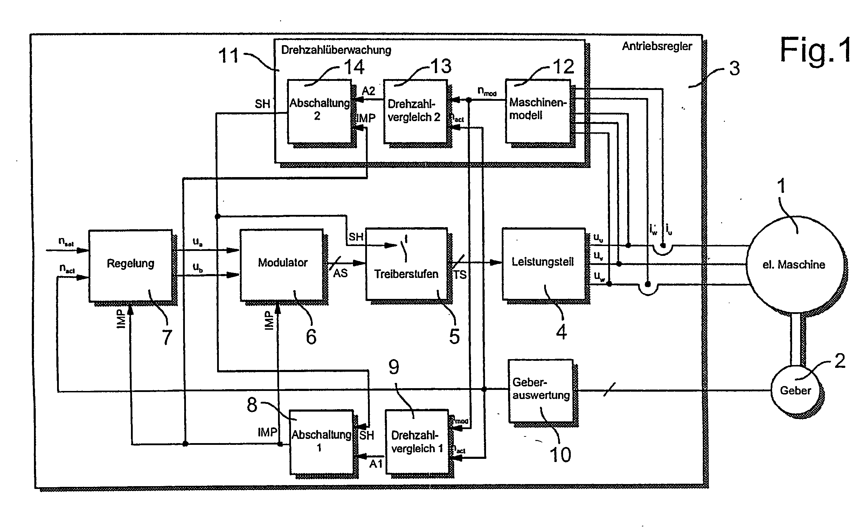

Fig. 1 zeigt im einzelnen einen elektrischen Antriebsmotor 1, an den ein Drehgeber 2 angekuppelt ist. Der Drehgeber 2 ist elektrisch mit einer Geberauswertung 10 verbunden, die ein Signal n_{act} für den Drehzahl-Istwert generiert, welches einer Motorregelung 7 zugeleitet wird. Die Motorregelung 7 erzeugt einen Spannungsvektor uₐ, u_{b}, welcher mittels eines Modulators 6, von Treiberstufen 5 und mittels eines Leistungsteils 4 in die Motorklemmenspannungen uᵤ, uᵥ, u_{w} umgesetzt wird.

Zur Drehzahlüberwachung des Antriebsmotors 1 werden die Motorklemmenspannungen uᵤ, uᵥ, u_{w} und die Motorphasenströme iᵤ und i_{w} einem separaten, unabhängigen Rechner 11 zugeführt. Dieser Rechner 11 berechnet mittels eines Maschinenmodells 12 eine Modelldrehzahl n_{mod}.

Das Maschinenmodell 12 enthält die für die Berechnung der Drehzahl erforderlichen Algorithmen, die aus der Fachliteratur allgemein bekannt sind und auf deren Darstellung deshalb hier verzichtet wird. Im Maschinenmodell 12 können auch verschiedene Algorithmen vorgesehen und gewählt werden, was vom Typ der jeweils damit kombinierten elektrischen Maschine, wie eines Synchron-, eines Asynchron-, eines Gleichstrommotors oder dgl., abhängig ist, wobei der passende Algorithmus bei der Inbetriebnahme der Anordnung erst gewählt werden kann. Die erforderlichen Parameter für das Maschinenmodell 12 können entweder aus der Angabe der Motordaten auf dem Typenschild geschätzt oder während eines Identifizierungslaufs bei der Inbetriebnahme gemessen werden.

Die Modelldrehzahl n_{mod}.wird einem Drehzahlvergleicher 13 zugeführt. Hier wird die Modelldrehzahl n_{mod} mit dem gemessenen Drehzahl-Istwert n_{act} verglichen, und übersteigt die Differenz einen festgelegten Schwellwert, so wird ein Überwachungssignal A2 erzeugt. Mit dem Überwachungssignal A2 wird über eine Abschalteinrichtung 14 das Signal SH zur Abschaltung der Treiberstufen 5 generiert, welches auch einer Abschaltungvorrichtung 8 zugeführt wird. Die Abschaltvorrichtung 8 liefert ein Signal IMP, mit dem redundant der Modulator 6 abgeschaltet und die Regelung 7 gesperrt wird.

Der Drehzahl-Istwert n_{act} wird einem Drehzahlvergleicher 9 zugeführt, der Teil des Motorregelkreises ist. Dieser Drehzahlvergleicher 9 arbeitet redundant zum Drehzahlvergleicher 13 und erzeugt ein Überwachungssignal A1, welches der Abschaltvorrichtung 8 zugeführt wird. Die Abschaltvorrichtungen 8 und 14 überwachen sich über die Signale IMP und SH kreuzweise gegenseitig.

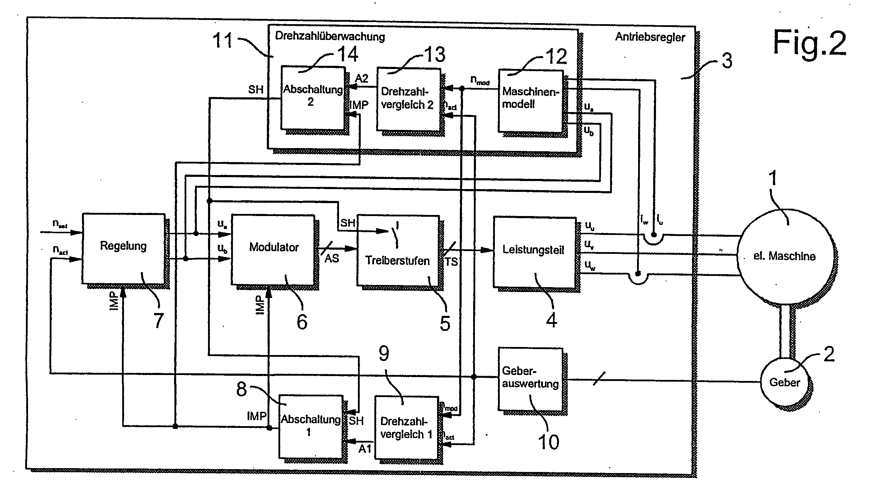

Fig. 2 zeigt eine Schaltungsanordnung, die weitgehend gleich mit derjenigen nach Fig. 1 ist, weswegen hier für gleiche Bauteile die gleichen Bezugsziffern verwendet sind. Im Unterschied zu der Schaltungsanordnung nach Fig. 1 wird hier anstelle der Motörklemmenspannungen uᵤ, uᵥ und u_{w} dem Maschinenmodell der Spannungsvektor uₐ, u_{b} zugeführt. In diesem Fall wird die Umsetzung des Spannungsvektors uₐ, u_{b} in die Motorklemmenspannungen uᵤ, uᵥ, u_{w} im Maschinenmodell 12 mit berücksichtigt.

## Patentansprüche

1. Verfahren zur sicherheitsgerichteten Drehzahlüberwachung eines mit einer Drehzahl-Regelung ausgestatteten elektrischen Antriebsmotors, wobei eine von einem Drehgeber gemessene Drehzahl mit einer berechneten Drehzahl verglichen und bei Überschreiten eines Differenz-Schwellwertes zwischen der gemessenen und der berechneten Drehzahl der Antriebsmotor stillgesetzt wird, indem in einem unabhängige Rechner anhand eines mathematischen Maschinenmodells eine Modelldrehzahl errechnet und bei Abweichung der errechneten Modelldrehzahl von der vom Drehgeber gemessenen Drehzahl über den Schwellwert hinaus das Stillsetzen des Antriebsmotors eingeleitet wird.

2. Verfahren nach Anspruch 1,
**dadurch gekennzeichnet,**
**daß** zum Stillsetzen des Antriebsmotors in dessen Regelkreis eingegriffen wird, wozu Signale zur Abbildung der elektrischen Motorspeisegrößen dem unabhängigen Rechner zugeführt werden.

3. Verfahren nach Anspruch 2,
**dadurch gekennzeichnet,**
**daß** bei einem Dreiphasen-Wechselstrom-Antriebsmotor die Signale zur Abbildung der elektrischen Motorspeisegrößen die drei anliegenden Motorklemmenspannungen uᵤ, uᵥ und u_{w} sowie zumindest zwei der Phasenströme iᵤ, iᵥ, und i_{w} sind.

4. Verfahren nach Anspruch 2,
**dadurch gekennzeichnet,**
**daß** die Signale zur Abbildung der elektrischen Motorspeisegrößen, die dem unabhängigen Rechner zugeführt werden, zumindest zum Teil aus der Motorregelung gewonnen werden.

5. Verfahren nach Anspruch 4,
**dadurch gekennzeichnet,**
**daß** als Signale zur Abbildung der elektrischen Motorspeisegrößen zwei der Motorphasenströme iᵤ, iᵥ und i_{w} und ferner der von der Motorregelung erzeugte Spannungsvektor uₐ, u_{b}, der in die Motorspannungen uᵤ, uᵥ, u_{w} umgesetzt wird, verwendet werden.
